# EUROPÄISCHE PATENTANMELDUNG

(11) **EP 4 825 658 A1**
(43) Veröffentlichungstag der Anmeldung: **21.10.2026**
(21) Anmeldenummer: 26163496.8
(22) Anmeldetag: 10.03.2026
(51) Int. Cl.: B60N 3/10, F16B 12/42

(54) **ADAPTER ZUR VERBINDUNG, INSBESONDERE VON EINEM BETÄTIGUNGSGRIFF, MIT EINEM BEDIENHEBEL EINER VERRIEGELBAREN TELESKOPSCHIENE**

(30) Priorität: 04.04.2025 DE 102025001154
(71) Anmelder: S&O Handelsgesellschaft mbH, 33775 Versmold (DE)
(72) Erfinder: Seidel, Fred, 33775 Versmold (DE)
(74) Vertreter: Schober, Mirko

(57) **Zusammenfassung**

Ein Adapter (1) zur Verbindung insbesondere eines Betätigungsgriffs (101) mit einem, vorzugsweise im Querschnitt zumindest abschnittsweise L-förmigen, Bedienhebel (11) einer Verriegelungsanordnung einer Teleskopschiene (10), insbesondere eines Auszugssystems (100), umfasst einen Grundkörper (2), der bevorzugt ein zur Kopplung mit dem Betätigungsgriff (101) vorgesehenes Kopplungsmittel (M) aufweist. Ferner einen Verbindungsbereich (4), der unter Ausbildung eines zur zumindest abschnittsweisen Aufnahme des Bedienhebels (101) vorgesehenen, vorzugsweise im Querschnitt U-förmigen, Verbindungskanals (K) zwei Schenkel (5, 6) und einen die Schenkel (5, 6) miteinander verbindenden Steg (7) aufweist. Der Verbindungskanal (K) ist zu einem seiner beiden Enden hin durch ein Begrenzungselement (8) zumindest teilweise verschlossen. An dem Begrenzungselement (8) ist ein in den Verbindungskanal (K) hinein gerichteter Vorsprung (9) angeordnet.

## Beschreibung

Die Erfindung betrifft einen Adapter zur Verbindung, insbesondere eines Betätigungsgriffs, mit einem, vorzugsweise im Querschnitt zumindest abschnittsweise L-förmigen, Bedienhebel einer Verriegelungsanordnung einer Teleskopschiene, insbesondere eines Auszugssystems. Weiterhin betrifft die Erfindung eine Teleskopschiene für ein Auszugssystem sowie ein Auszugssystem mit einem Betätigungsgriffs und zwei, vorzugsweise erfindungsgemäßen, Teleskopschienen sowie zwei erfindungsgemäßen Adaptern.

Teleskopschienen dienen der linearen Verlagerbarkeit von Auszügen oder Schubladen relativ zu einer diese tragenden Basis, wie beispielsweise einem Rahmen, Korpus oder Rack. Im weiteren Verlauf werden Schubladen auch als Auszüge benannt. Insbesondere bei der mobilen Verwendung in Fahrzeugen ist schon aus Sicherheitsgründen notwendig, das Teleskopieren der Teleskopschienen zu blockieren, um die Auszüge nebst deren Inhalt in ihrer Lage zu sichern. Hierzu sind einfache Systeme bekannt, welche eine Verriegelung des Auszugs selbst vorsehen. Weitergehende Ausgestaltungen sehen hierfür eine in oder an den Teleskopschienen angeordnete Verriegelungsanordnung vor. In jedem Fall ist so sichergestellt, dass der jeweilige Auszug nur dann verlagert werden kann, wenn dieser zuvor entriegelt wird. Je nach Ausführungsform ist es so mitunter möglich, einen Auszug entweder nur im eingeschobenen oder sowohl im eingeschobenen als auch im ausgezogenen Zustand zu verriegeln.

DE 198 49 798 A1 offenbart eine Teleskopschiene, welche sowohl im eingefahrenen als auch im teleskopierten Zustand verriegelbar ist. Hierzu sind mit Rastnasen ausgestattete Hebel vorgesehen, die über einen händisch bedienbaren Schieber schwenkbar sind, indem der Schieber gegen eine Rückstellkraft linear verlagert wird. Hierdurch schwenken die Hebel aus ihrer verrasteten Stellung heraus und geben so die Teleskopierbarkeit der Teleskopschiene frei.

Üblicherweise werden Auszüge durch jeweils zwei Teleskopschienen gelagert und geführt, so dass zu deren Entriegelung beide Hände notwendig sind. Dies ist insofern problematisch, als dass die eigentliche Verlagerung des Auszugs mangels einer freien Hand erschwert ist. Daher hat sich der Einsatz eines Betätigungsgriffs, z.B. in Gestalt eines Griffrohrs oder einer Griffleiste, etabliert, welche für eine synchrone Bedienbarkeit der Verriegelungsanordnungen beider Teleskopschienen sorgt und gleichzeitig als Griff dient, um den Auszug in die gewünschte Richtung zu verlagern. Die Verbindung zwischen einem solchen Betätigungsgriff und den Bedienhebeln der Verriegelungsanordnungen beider Teleskopschienen über geeignete Adapter gestaltet sich bisweilen aufwendig. Zudem können durch den Einsatz eines Betätigungsgriffs höhere Belastungen auf die an sich nur für leichte Bedienkräfte ausgelegten Bedienhebel übertragen werden.

Der vorliegenden Erfindung liegt daher die Aufgabe zugrunde, einen Adapter für die Verbindung, insbesondere eines Betätigungsgriffs, mit einem Bedienhebel einer Verriegelungsanordnung einer Teleskopschiene aufzuzeigen, welcher eine einfache Installation ermöglicht. Dabei soll eine bevorzugte Teleskopschiene für den genannten Einsatz geschaffen und ein entsprechend ausgestattetes Auszugssystem vorgestellt werden.

Die Aufgabe wird durch einen Adapter mit den Merkmalen von Anspruch 1, eine Teleskopschiene mit den Merkmalen von Anspruch 8 sowie ein Auszugssystem mit den Merkmalen von Anspruch 10 gelöst. Vorteilhafte Weiterbildungen sind Gegenstand der jeweiligen Unteransprüche.

Erfindungsgemäß wird vorgeschlagen, dass der Adapter einen Grundkörper umfasst, welcher, bevorzugt ein zur Kopplung mit dem Betätigungsgriff vorgesehenes Kopplungsmittel, einen Verbindungsbereich besitzt. Als Betätigungsgriff, der zur Einhandver- und entriegelung dient, kommt beispielsweise ein Betätigungsgriff in Gestalt eines Griffrohrs oder einer Griffleiste in Betracht. In einer alternativen Ausführung kann der Adapter jedoch auch ohne separaten Betätigungsgriff auskommen, indem Eingriffsabschnitte am Adapter selbst verwirklicht ist. Bei dieser Ausführung werden bevorzugt zwei erfindungsgemäße Adapter verwendet, die an beiden Seiten eines Auszugs angebracht und gleichzeitig betätigt werden. Der Verbindungsbereich weist zwei Schenkel und einen die Schenkel miteinander verbindenden Steg auf. Die Schenkel und der Steg bilden einen Verbindungskanal zwischen sich aus, welcher zur zumindest abschnittsweisen Aufnahme des Bedienhebels vorgesehen ist. Vorzugsweise kann der Verbindungskanal dabei einen U-förmigen Querschnitt aufweisen. Zu einem seiner beiden Enden hin ist der Verbindungskanal durch ein Begrenzungselement zumindest teilweise verschlossen, wobei an dem Begrenzungselement ein in den Verbindungskanal hinein gerichteter Vorsprung angeordnet ist.

Der sich aus der erfindungsgemäßen Ausgestaltung des Adapters ergebende Vorteil liegt darin begründet, dass dieser sich besonders für eine Verbindung mit einem im Querschnitt L-förmigen Bedienhebel der Verriegelungsanordnung einer Teleskopschiene eignet. Gegenüber der sonst flachen Ausbildung derartiger Bedienhebel erhält dieser durch seine zumindest abschnittsweise L-förmige Ausgestaltung ein höheres Widerstandsmoment um seine schwache Achse. Mit anderen Worten ist der Bedienhebel somit sowohl in Bezug auf seine angedachte Schwenkrichtung als auch senkrecht zu dieser in sich steifer, wodurch sich ein insgesamt stabilerer Eindruck beim Bedienen des Betätigungsgriffs ergibt. Dabei spielt die Anordnung des Vorsprungs eine entscheidende Rolle, da dieser sowohl eine präzise Zentrierung des Adapters insbesondere an dem so gestalteten Bedienhebel ermöglicht und gleichzeitig einen seitenunabhängigen Einsatz erlaubt. Dies liegt im Wesentlichen daran, dass bei der für Auszüge üblichen Verwendung von zwei Teleskopschienen deren Bedienhebel die gleiche Ausrichtung ihrer L-förmige Querschnitte aufweisen. Durch den Vorsprung an dem Adapter ist es möglich, diesen um 180° gedreht mit beiden Bedienhebeln zu verbinden, so dass deren Kopplungsmittel einander zugewandt sind, um einen Betätigungsgriff zwischen sich einzugliedern.

Nach einer bevorzugten Weiterbildung des grundsätzlichen Erfindungsgedankens kann der Vorsprung unter Ausbildung eines Spalts von den beiden Schenkeln und dem Steg des Verbindungsbereichs des Adapters umfangsseitig beabstandet sein. Vorzugsweise kann der Spalt dabei U-förmig ausgestaltet sein.

Die Erfindung sieht vor, dass der Steg wenigstens eine Durchgangsöffnung aufweisen kann. Diese wenigstens eine Durchgangsöffnung kann dann in besonders vorteilhafter Weise dazu vorgesehen sein, ein Verbindungsmittel durch diese hindurch anzuordnen, um den Verbindungsbereich des Adapters mit dem Bedienhebel der Teleskopschiene zu verbinden. Dies ist insofern vorteilhaft, als dass diese Verbindung einfach und mit handelsüblichen Werkzeugen durchführbar sowie bei Bedarf wieder lösbar ist. So kann als Verbindungsmittel beispielsweise eine Schraube und eine damit korrespondierende Mutter dienen, um die Verbindung herzustellen.

Die Schenkel des Verbindungsbereichs des Adapters können eine erste Innenseite und eine zweite Innenseite aufweisen, welche einander zugewandt sind. Weiter kann der Vorsprung eine erste Seitenfläche und eine zweite Seitenfläche besitzen, welche voneinander abgewandt sind. Vorzugsweise können sich dann die beiden Seitenflächen des Vorsprungs jeweils parallel zu der ihr zugewandten Innenseite der Schenkel erstrecken. Auf diese Weise wird eine jeweils gleichmäßige Breite wenigstens eines Teils des Spalts zwischen dem Vorsprung und dem ihn umgebenden Verbindungskanal realisiert, um die einfache, insbesondere klemmfreie, Aufnahme eines Bedienhebels einer Teleskopschiene zu ermöglichen.

Alternativ oder ergänzend kann der Vorsprung eine dem Steg zugewandte dritte Seitenfläche aufweisen, während der Steg eine der dritten Seitenfläche zugewandte dritte Innenseite besitzt. Vorzugsweise können sich dann die dritte Seitenfläche des Vorsprungs und die dritte Innenseite des Stegs parallel zueinander erstrecken. Auf diese Weise wird, insbesondere ebenfalls, eine jeweils gleichmäßige Breite wenigstens eines Teils des Spalts zwischen dem Vorsprung und dem ihn umgebenden Verbindungskanal realisiert, um die einfache, insbesondere klemmfreie, Aufnahme eines Bedienhebels einer Teleskopschiene zu ermöglichen.

Selbstverständlich ist es auch möglich, wenigstens zwei der zuvor erwähnten, sich gegenüberliegenden und den Spalt zwischen sich einschließenden Flächen und Seiten gezielt windschief auszurichten, sofern eine Klemmwirkung in Bezug auf den aufzunehmenden Abschnitt des Bedienhebels zu gewünscht ist.

Gemäß einer bevorzugten Weiterentwicklung des Adapters kann das Kopplungsmittel einen Zapfen besitzen. Dies ist insofern vorteilhaft, als dass der Zapfen dann zur steckbaren Kopplung mit einem Betätigungsgriff vorgesehen sein kann. In jedem Fall ermöglicht der Zapfen eine überaus einfache und werkzeuglose Verbindung mit einem Betätigungsgriff, welche hierfür bevorzugt als Hohlkörper mit beidseitig offenen Enden ausgeführt sein kann, in denen die jeweiligen Zapfen dann aufnehmbar sind. Selbstverständlich ist es auch möglich, den jeweiligen Zapfen durch ein sich quer zu seiner Längsrichtung erstreckendes Verbindungsmittel in seiner Lage innerhalb der oder um den Betätigungsgriff zu sichern. Hierfür werden entsprechend miteinander korrespondierende Löcher in dem Betätigungsgriff und den Zapfen benötigt, durch welche hindurch dann beispielsweise jeweils eine Schraube oder ein Niet anordenbar ist.

Grundsätzlich ist vorgesehen, dass der Zapfen vier Wände aufweisen kann, welche zusammen einen quadratischen oder rechteckigen Querschnitt bilden. An den voneinander abgewandten Außenseiten dieser Wände kann in vorteilhafter Weise jeweils wenigstens eine Verdickung angeordnet oder ausgebildet sein. Die Verdickungen springen dann gegenüber dem Außenumfang des Zapfens vor, so dass dieser im Bereich der Leiste/n entsprechend vergrößert ist. Auf diese Weise kann eine vorteilhafte Klemmwirkung innerhalb des Betätigungsgriffs erzielt werden, um eine spielfreie Verbindung mit dem Adapter zu erreichen. Vorzugsweise können sich die Verdickungen dabei parallel zu einer Längsrichtung des Zapfens, insbesondere leistenförmig, erstrecken. Selbstverständlich sind auch andere Ausgestaltungen der jeweiligen Verdickung möglich, wie beispielsweise punktuelle oder strukturierte Formen, um nur einige Möglichkeiten einer nicht abschließenden Aufzählung zu nennen.

Der nunmehr vorgestellte erfindungsgemäße Adapter ermöglicht eine überaus einfachere Installation an einem zwei Teleskopschienen mit Verriegelungsanordnungen umfassenden Auszug. Einerseits für beidseitig zu verriegelnde Auszugsysteme sowie für Einhandsysteme, bei denen die beidseitig des Auszugs installierten Adapter über einen Betätigungsgriff miteinander verbunden sind. In besonders bevorzugter Weise kann es sich bei dem Adapter um ein Bauteil aus Kunststoff handeln, um eine einfache Formgebung sowie kostengünstige Fertigung realisieren zu können. Besonders bevorzugt können das Kopplungsmittel und die Schenkel sowie der Steg des Verbindungsbereichs jeweils materialeinheitlich einstückige Bestandteile des, insbesondere den Adapter bildenden, Grundkörpers sein. Weiter oder alternativ kann der Grundkörper Bereiche mit etwaigen oberflächlichen Strukturen aufweisen, welche eine sichere da rutschfeste Handhabung des Adapters, vorzugsweise bei dessen Installation, ermöglichen.

Weiter ist die Erfindung auf eine Teleskopschiene für ein Auszugssystem gerichtet, welche eine zur Manipulation ihrer Teleskopierbarkeit ausgebildete Verriegelungsanordnung umfasst. Die Verriegelungsanordnung besitzt einen schwenkbaren Bedienhebel, welcher einen im Querschnitt L-förmigen Befestigungsabschnitt aufweist. Der Befestigungsabschnitt besitzt hierzu einen ersten Befestigungsschenkel und einen zweiten Befestigungsschenkel. In besonders bevorzugter Weise kann der Befestigungsabschnitt so ausgebildet sein, dass dieser sich zur direkten Verbindung mit dem erfindungsgemäßen Adapter eignet. Der sich aus der Teleskopschiene ergebende Vorteil wurde bereits, zumindest sinngemäß, im Zusammenhang mit dem erfindungsgemäßen Adapter näher erläutert, so dass zur Vermeidung von Wiederholungen an dieser Stelle auf die entsprechenden Ausführungen hierzu verwiesen wird.

Nach einer bevorzugten Weiterbildung der erfindungsgemäßen Teleskopschiene kann der erste Befestigungsschenkel des Bedienhebels wenigstens ein Durchgangsloch besitzen, welches mit einer Durchgangsbohrung des erfindungsgemäßen Adapters korrespondiert. Im zusammengesetzten Zustand der Teleskopschiene mit dem Adapter kann dann in vorteilhafter Weise der erste Befestigungsschenkel des Bedienhebels zumindest bereichsweise zwischen der dritten Innenseite des Stegs und der dritten Seitenfläche des Vorsprungs des Adapters angeordnet sein, während der zweite Befestigungsschenkel des Bedienhebels zumindest bereichsweise zwischen der ersten Innenseite oder der zweiten Innenseite des Stegs und der ersten Seitenfläche oder der zweiten Seitenfläche des Vorsprungs des Adapters ist.

Weiter ist die Erfindung auf ein Auszugssystem gerichtet, welches einen Betätigungsgriff sowie zwei Teleskopschienen umfasst. Die Teleskopschienen weisen jeweils eine zur Manipulation ihrer Teleskopierbarkeit ausgebildete Verriegelungsanordnung auf. Bei der jeweiligen Teleskopschiene kann es sich bevorzugt um die erfindungsgemäße Teleskopschiene handeln. Der Betätigungsgriff ist über die Adapter mit den Teleskopschienen verbunden oder jeder Adapter ist mit einem Betätigungsgriff ausgebildet. In jedem Fall besitzen die Verriegelungsanordnungen jeweils einen Bedienhebel, welche jeweils durch einen erfindungsgemäßen Adapter mit dem Betätigungsgriff verbunden sind. Vorzugsweise ist der jeweilige Bedienhebel hierzu im Querschnitt zumindest abschnittsweise L-förmig ausgestaltet. Der sich aus dem Auszugssystem ergebende Vorteil wurde ebenfalls bereits, zumindest sinngemäß, im Zusammenhang mit dem erfindungsgemäßen Adapter näher erläutert, so dass zur Vermeidung von Wiederholungen an dieser Stelle auf die entsprechenden Ausführungen hierzu verwiesen wird.

Die Erfindung wird nachfolgend anhand von schematisch dargestellten Ausführungsbeispielen näher erläutert. Es zeigen:
- Figur 1 -: einen erfindungsgemäßen Adapter in einer ersten Variante in perspektivischer Darstellungsweise,
- Figur 2 -: den Adapter aus Figur 1 in einer veränderten perspektivischen Darstellungsweise,
- Figur 3 -: einen erfindungsgemäßen Adapter in einer zweiten Variante in perspektivischer Darstellungsweise,
- Figur 4 -: den Adapter aus Figur 3 in einer veränderten perspektivischen Darstellungsweise,
- Figur 5 -: einen erfindungsgemäßen Adapter in einer dritten Variante in perspektivischer Darstellungsweise,
- Figur 6 -: den Adapter aus Figur 5 in einer veränderten perspektivischen Darstellungsweise,
- Figur 7 -: eine Ansicht auf eine Seite der ersten und dritten Variante des Adapters aus den Figuren 1 und 2 sowie 5 und 6,
- Figur 8 -: eine Ansicht auf eine Seite der zweiten Variante des Adapters aus den Figuren 3 und 4,
- Figur 9 -: ein erfindungsgemäßes Auszugssystem in perspektivischer Darstellungsweise als Explosionszeichnung,
- Figur 10 -: das Auszugssystem aus Figur 7 im montierten Zustand in ansonsten unveränderter Darstellungsweise,
- Figur 11 -: einen Bedienhebel einer erfindungsgemäßen Teleskopschiene des Auszugssystems aus Figur 8 in perspektivischer Darstellungsweise und
- Figur 12 -: den Bedienhebel aus Figur 9 in einer veränderten perspektivischen Darstellungsweise.

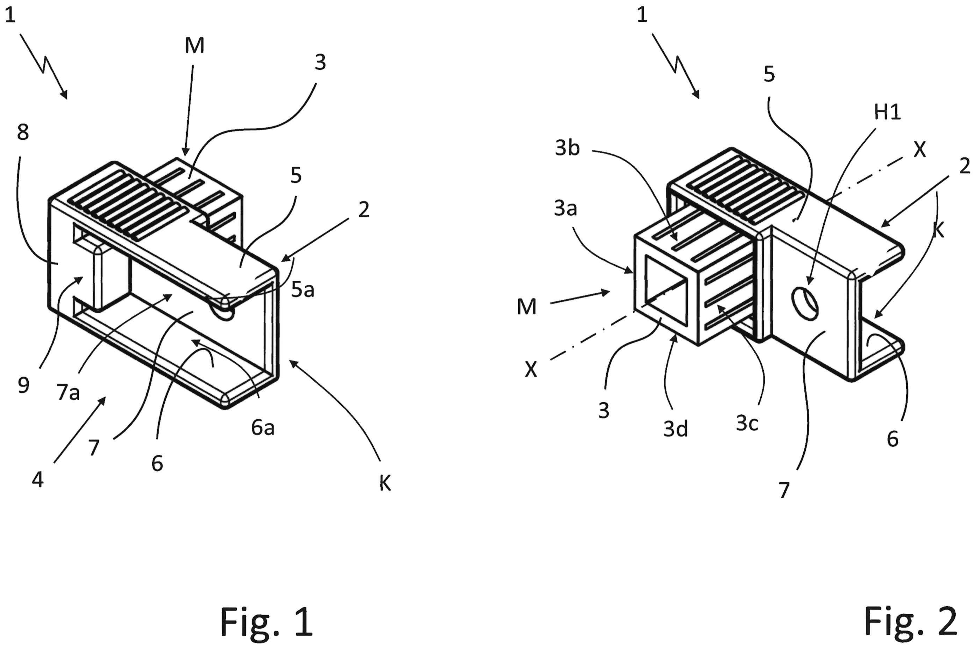

Figur 1 zeigt eine erste Variante eines erfindungsgemäßen Adapters 1 in einer perspektivischen Darstellungsweise. Der Adapter 1 umfasst einen Grundkörper 2, welcher ein Kopplungsmittel M sowie einen Verbindungsbereich 4 aufweist. Bedingt durch die Darstellung in Figur 1 fällt der Blick primär auf den Verbindungsbereich 4, der einen ersten Schenkel 5 und einen zweiten Schenkel 6 sowie einen die beiden Schenkel 5, 6 miteinander verbindenden Steg 7 besitzt. Die Schenkel 5, 6 und der Steg 7 bilden zusammen einen seitlich offenen Verbindungskanal K mit U-förmigem Querschnitt. Der Verbindungskanal K erstreckt sich zwischen seinen beiden Enden, von denen das mit Bezug auf die Darstellung von Figur 1 rechts gelegene erste Ende offen ist, während das dem ersten Ende gegenüberliegende zweite Ende durch ein Begrenzungselement 8 verschlossen ist. Erkennbar ist an dem Begrenzungselement 8 ein Vorsprung 9 angeordnet, welcher in den Verbindungskanal K hinein gerichtet ist. Der Vorsprung 9 ist unter Ausbildung eines in dem hier gezeigten Ausführungsbeispiel U-förmigen Spalts von den beiden Schenkel 5, 6 und dem Steg 7 des Verbindungsbereichs 4 umfangsseitig beabstandet.

Figur 2 zeigt den Adapter 1 aus Figur 1 in einer demgegenüber um 180° horizontal gedrehten perspektivischen Darstellungsweise. Hierdurch fällt der Blick primär auf das Kopplungsmittel M. Erkennbar besitzt das Kopplungsmittel M einen Zapfen 3, welcher insgesamt vier, einen quadratischen oder rechteckigen Querschnitt bildende Wände 3a-3d aufweist. An den voneinander abgewandten Außenseiten der Wände 3a-3d sind in dem hier gezeigten Ausführungsbeispiel jeweils drei Verdickungen B angeordnet oder ausgebildet, welche sich allesamt parallel zu einer Längsrichtung X des Zapfens 3 erstrecken. Weiter ersichtlich ist, dass der Steg 7 in der hier gezeigten ersten Variante des Adapters 1 eine erste Durchgangsöffnung H1 aufweist. Der in den Figuren 1 und 2 dargestellte Adapter 1 eignet sich insbesondere für Schubkastensysteme, die kein Schubkasten-Vorderstück bzw. keine vordere Seitenwand aufweisen und damit für platzsparende Einbaulösungen.

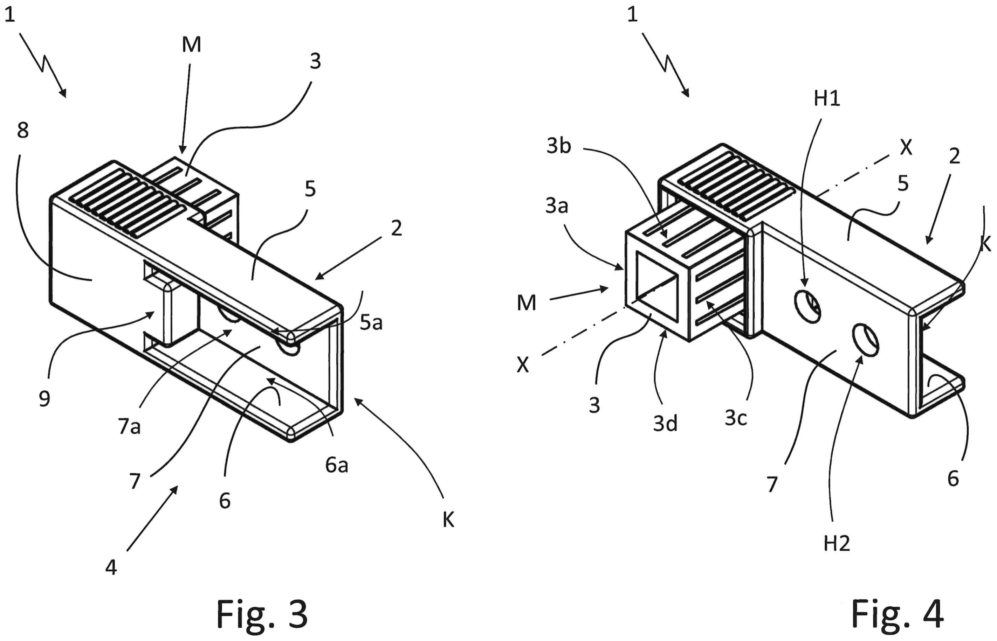

Figur 3 zeigt eine zweite Variante des erfindungsgemäßen Adapters 1 aus Figur 1. Im Unterschied zu der ersten Variante weist der Adapter 1 hierbei einen von der Längsrichtung X des Zapfens 3 weiter weg gelegenen Verbindungsbereich 4 auf, wodurch das Begrenzungselement 8 deutlich breiter und der Grundkörper 2 so insgesamt länger ist. Durch die Verlagerung des Verbindungsbereichs 4 sind sowohl die beiden Schenkel 5, 6 als auch der Steg 7 ebenfalls länger. Alle ansonsten gleichen Merkmale weisen die Bezugszeichen der ersten Variante auf.

Figur 4 zeigt die zweite Variante des Adapters 1 aus Figur 3 in einer demgegenüber um 180° horizontal gedrehten perspektivischen Darstellungsweise. Damit entspricht die Darstellung der des Adapters 1 in seiner ersten Variante aus Figur 2. Gut zu erkennen ist, dass der nunmehr längere Steg 7 eine weitere zweite Durchgangsöffnung H2 besitzt. Der Adapter 1 gemäß den Figuren 3 und 4 stellt eine gegenüber der Ausführungsform der Figuren 1 und 2 verlängerte Ausführungsform dar. Diese Ausführungsform eignet sich insbesondere für Schubkastensysteme mit einem Schubkasten-Vorderstück bzw. einer vorderen Seitenwand.

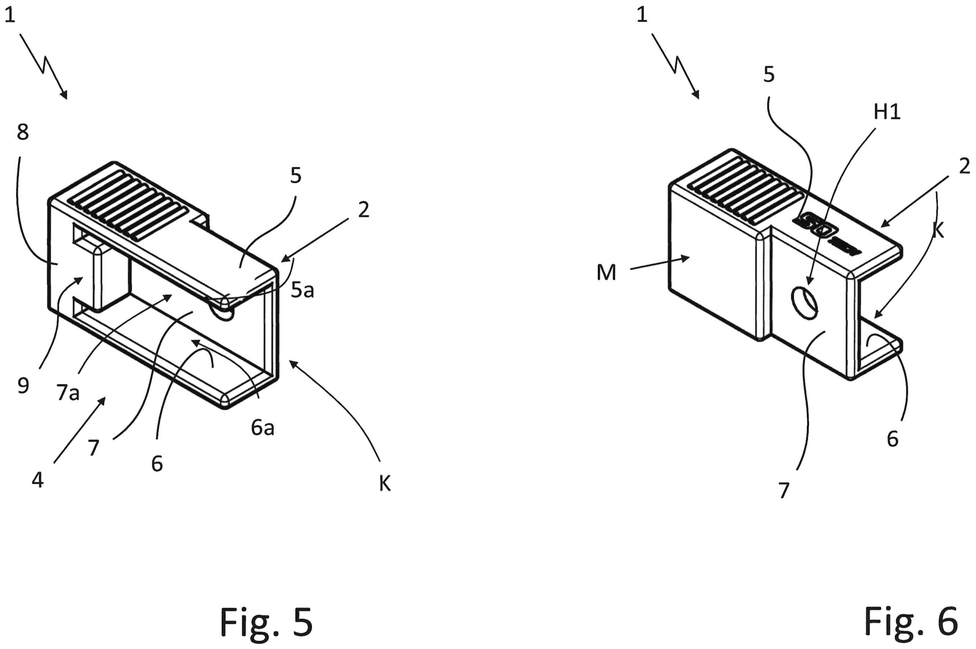

Figur 5 ist eine dritte Variante des erfindungsgemäßen Adapters 1 aus Figur 1 und Figur 2 zu entnehmen. Erkennbar ist, dass diese Variante keinen vorspringenden Zapfen 3 aufweist. Insbesondere ist diese Ausführung dazu gedacht, einen Betätigungsgriff gleich in den Adapter 1 selbst zu integrieren. Hier wird also kein separater Betätigungsgriff angebracht, sondern bevorzugt an beiden Seiten des Auszugs jeweils ein Adapter 1, die jeweils einen Griffabschnitt aufweisen. Im Übrigen ist der Adapter 1 der dritten Variante baugleich mit der ersten Variante.

Figur 6 zeigt die dritte Variante des Adapters 1 aus Figur 5 in einer demgegenüber um 180° horizontal gedrehten perspektivischen Darstellungsweise. In dieser Darstellung ist gut zu erkennen, dass das Kopplungsmittel M nunmehr als ebene Fläche ausgestaltet ist. Zudem kann das Kopplungsmittel M beispielsweise mit einer individuellen und hier nicht näher ersichtlichen Bohrung ausgestattet werden, um durch die Verwendung eines Verbindungsmittels die notwendige Verbindung herzustellen.

Die in den Figuren 1-6 dargestellten Adapter 1 sind bevorzugt symmetrisch aufgebaut, sodass sie sich zur Montage auf beiden Seiten eines Auszugs eignen. Demzufolge muss prinzipiell lediglich jeweils eine Sorte Adapter 1 vorgehalten werden. Mit den Adaptern 1 kann ein modulares System geschaffen werden, welches sich universell für verschiedene Verriegelungssysteme an verschiedenen Auszügen einsetzen lässt.

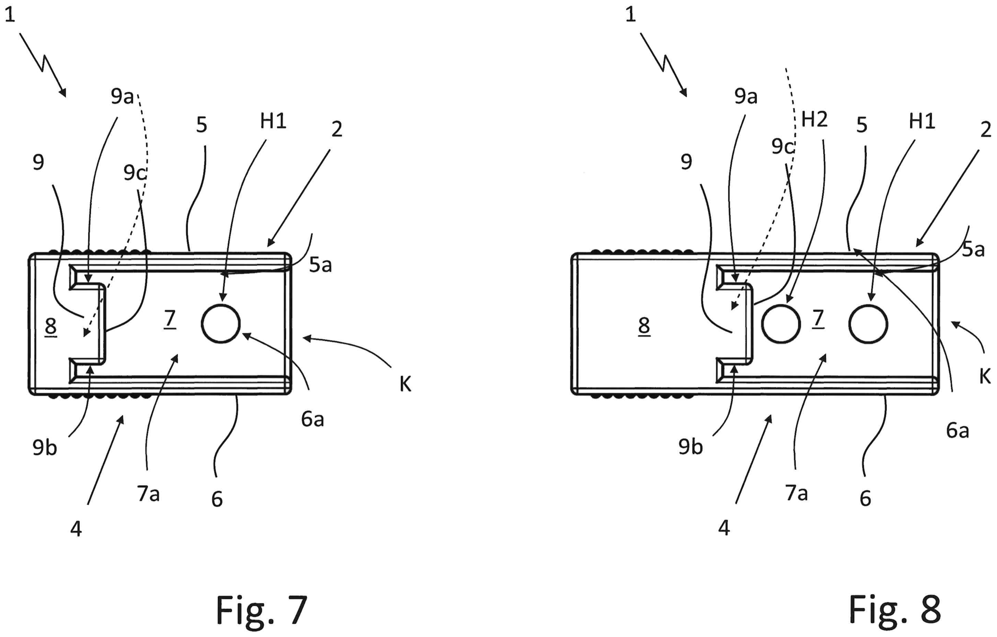

Figur 7 ist eine Seitenansicht der ersten Variante und der dritten Variante des Adapters 1 aus den Figuren 1 und 2 sowie 5 und 6 zu entnehmen. Hierbei fällt der Blick im Wesentlichen auf den Steg 7 des Verbindungsbereichs 4. In dieser Seitenansicht wird deutlich, dass der erste Schenkel 5 des Verbindungsbereichs 4 eine erste Innenseite 5a aufweist, während der zweite Schenkel 6 des Verbindungsbereichs 4 eine zweite Innenseite 6a besitzt, welche der ersten Innenseite 5a zugewandt ist. Demgegenüber besitzt der Vorsprung 9 eine erste Seitenfläche 9a und eine zweite Seitenfläche 9b, welche voneinander abgewandt sind. Dabei erstrecken sich die beiden Seitenflächen 9a, 9b des Vorsprungs 9 jeweils parallel zu der ihr zugewandten Innenseite 5a, 6a des jeweiligen Schenkels 5, 6. Zudem weist der Vorsprung 9 eine dem Steg 7 zugewandte dritte Seitenfläche 9c auf, während der Steg 7 eine der dritten Seitenfläche 9c des Vorsprungs 9 zugewandte dritte Innenseite 7a besitzt. Die dritte Seitenfläche 9c des Vorsprungs 9 und die hiervon beabstandete dritte Innenseite 7a des Stegs 7 erstrecken sich dabei parallel zueinander.

Figur 8 zeigt demgegenüber eine Seitenansicht der zweiten Variante des Adapters 1 aus den Figuren 3 und 4. In dieser Ansicht wird nochmals deutlich, dass der Grundkörper 2 in dieser Variante insgesamt länger und das Begrenzungselement deutlich breiter als in den Varianten eins und drei ist.

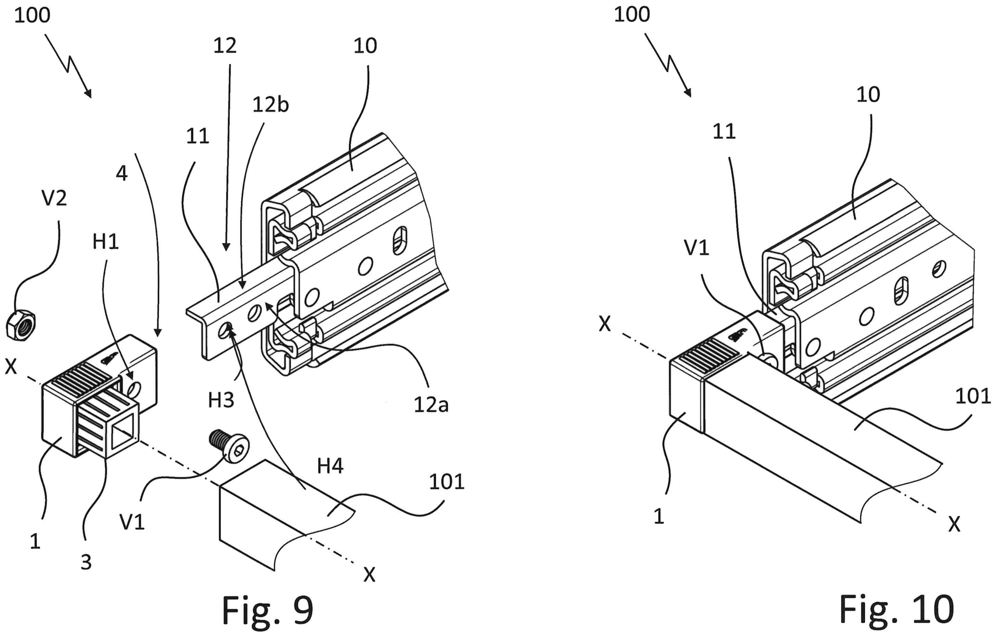

Figur 9 ist ein Ausschnitt eines erfindungsgemäßen Auszugssystems 100 in einer Explosionsdarstellung zu entnehmen, welches einen Betätigungsgriff, z.B. in Gestalt eines Griffrohrs oder einer Griffleiste, 101 und zwei Teleskopschienen 10 umfasst, von denen aufgrund der auf einen Ausschnitt reduzierten Darstellung nur eine Teleskopschiene 10 sichtbar ist. Die Teleskopschienen 10 weisen eine zur Manipulation ihrer Teleskopierbarkeit ausgebildete Verriegelungsanordnung auf, welche jeweils einen im Querschnitt zumindest abschnittsweise L-förmigen Bedienhebel 11 besitzen. Bei dem Betätigungsgriff 101 handelt es sich in dem hier gezeigten Beispiel bevorzugt um ein Hohlprofil, z.B. ein im Querschnitt quadratisches Rohr. Weiterhin sind Verbindungsmittel V1, V2 in Form einer Schraube und einer damit korrespondierenden Mutter zu sehen. Rein beispielhaft ist einer der Adapter 1 in seiner ersten Variante zu sehen. Erkennbar weist der Bedienhebel 11 einen im Querschnitt L-förmigen Befestigungsabschnitt 12 auf, welcher einen ersten Befestigungsschenkel 12a und einen zweiten Befestigungsschenkel 12b besitzt. Ersichtlich sind in dem ersten Befestigungsschenkel 12a des Bedienhebels 11 vorliegend zwei Durchgangslöcher H3, H4 angeordnet.

Figur 10 zeigt den montierten Zustand des Auszugssystems 100 aus Figur 9. Hierzu wurde der Betätigungsgriff 101 mit einem ihrer offenen Enden auf den Zapfen 3 des Adapters 1 aufgesteckt. Weiter wurde der Verbindungsbereich 4 des Adapters 1 so mit dem Befestigungsabschnitt 12 des Bedienhebels 11 gekoppelt, dass der erste Befestigungsschenkel 12a zumindest bereichsweise zwischen der dritten Innenseite 7a des Stegs 7 und der dritten Seitenfläche 9c des Vorsprungs 9 des Adapters 1 angeordnet ist, während der zweite Befestigungsschenkel 12b in dem hier gezeigten Beispiel zumindest bereichsweise zwischen der ersten Innenseite 5a des ersten Schenkels 5 und der ersten Seitenfläche 9a des Vorsprungs 9 des Adapters 1 angeordnet ist. Zudem wurde das Verbindungsmittel V1 durch die Durchgangsöffnung H1 des Adapters 1 und eine der Durchgangsöffnungen H3, H4 des ersten Befestigungsschenkels 12a des Bedienhebels 11 hindurch angeordnet und mit dem zweiten Verbindungsmittel V2 gesichert.

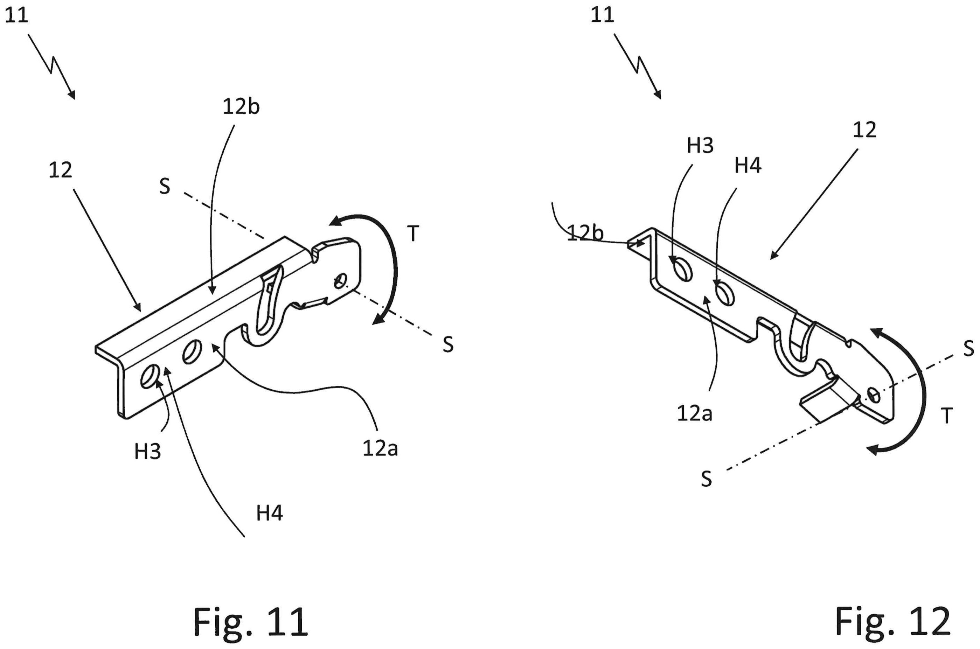

Figur 11 zeigt den Bedienhebel 11 der Verriegelungsanordnung der Teleskopschiene 10 aus den Figuren 9 und 10 in isolierter Form in perspektivischer Darstellungsweise. Erkennbar ist, dass der Bedienhebel 11 um eine Schwenkachse S herum begrenzt schwenkbar an einem Teil der Teleskopschiene 10 gelagert ist. Die Schwenkbarkeit T ist durch einen gekrümmten schwarzen Pfeil angedeutet. Durch seine hier nicht gezeigte Verbindung mit dem Betätigungsgriff 101 wird dieser entsprechend verschwenkt, sobald der Betätigungsgriff 101 beispielsweise niedergedrückt wird. Bei einem hier nicht näher ersichtlichen Auszug mit zwei Teleskopschienen 10 können so direkt beide Bedienhebel 11 und deren Verriegelungsanordnung verschwenkt werden, um deren die Teleskopierbarkeit der Teleskopschienen 10 manipulierende Verriegelung zu lösen oder zu aktivieren.

Figur 12 zeigt nochmals den Bedienhebel 11 aus Figur 11 in einer veränderten perspektivischen Darstellung.

## Patentansprüche

1. Adapter (1) zur Verbindung insbesondere eines Betätigungsgriffs, (101) mit einem, vorzugsweise im Querschnitt zumindest abschnittsweise L-förmigen, Bedienhebel (11) einer Verriegelungsanordnung einer Teleskopschiene (10), insbesondere eines Auszugssystems (100), umfassend einen Grundkörper (2), bevorzugt mit einem zur Kopplung mit dem Betätigungsgriff (101) vorgesehenen Kopplungsmittel (M), mit einem Verbindungsbereich (4), welcher unter Ausbildung eines zur zumindest abschnittsweisen Aufnahme des Bedienhebels (101) vorgesehenen, vorzugsweise im Querschnitt U-förmigen, Verbindungskanals (K) zwei Schenkel (5, 6) und einen die Schenkel (5, 6) miteinander verbindenden Steg (7) aufweist, wobei der Verbindungskanal (K) zu einem seiner beiden Enden hin durch ein Begrenzungselement (8) zumindest teilweise verschlossen ist, an dem ein in den Verbindungskanal (8) hinein gerichteter Vorsprung (9) angeordnet ist.

2. Adapter (1) nach Anspruch 1,
**dadurch gekennzeichnet,**
**dass** der Vorsprung (9) unter Ausbildung eines, insbesondere U-förmigen, Spalts von den beiden Schenkeln (5, 6) und dem Steg (7) umfangsseitig beabstandet ist.

3. Adapter (1) nach Anspruch 1 oder 2,
**dadurch gekennzeichnet,**
**dass** der Steg (7) wenigstens eine, insbesondere zur Anordnung eines den Verbindungsbereich (4) mit dem Bedienhebel (101) verbindenden Verbindungsmittels (V1, V2) vorgesehene, Durchgangsöffnung (H1, H2) aufweist.

4. Adapter (1) nach einem der vorhergehenden Ansprüche, **dadurch gekennzeichnet,**
**dass** die Schenkel (5, 6) eine erste Innenseite (5a) und eine zweite Innenseite (6a) aufweisen, welche einander zugewandt sind, und dass der Vorsprung (9) eine erste Seitenfläche (9a) und eine zweite Seitenfläche (9b) besitzt, welche voneinander abgewandt sind, wobei die beiden Seitenflächen (9a, 9b) des Vorsprungs (9) sich jeweils parallel zu der ihr zugewandten Innenseite (5a, 6a) der Schenkel (5, 6) erstrecken.

5. Adapter (1) nach einem der vorhergehenden Ansprüche, **dadurch gekennzeichnet,**
**dass** der Vorsprung (9) eine dem Steg (7) zugewandte dritte Seitenfläche (9c) aufweist und der Steg (7) eine der dritten Seitenfläche (9c) zugewandte dritte Innenseite (7a) besitzt, wobei die dritte Seitenfläche (9c) des Vorsprungs (9) und die dritte Innenseite (7a) des Stegs (7) sich parallel zueinander erstrecken.

6. Adapter (1) nach einem der vorhergehenden Ansprüche, **dadurch gekennzeichnet,**
**dass** das Kopplungsmittel (M) einen, insbesondere zur steckbaren Kopplung mit dem Betätigungsgriff (101) vorgesehenen, Zapfen (3) besitzt.

7. Adapter (1) nach Anspruch 6,
**dadurch gekennzeichnet,**
**dass** der Zapfen (3) vier einen quadratischen oder rechteckigen Querschnitt bildende Wände (3a-3d) aufweist, wobei an voneinander abgewandten Außenseiten der Wände (3a-3d) jeweils wenigstens eine, insbesondere sich parallel zu einer Längsrichtung (X) des Zapfens (3) erstreckende, Verdickung (B) angeordnet oder ausgebildet ist.

8. Teleskopschiene (10) für ein Auszugssystem (100), umfassend eine zur Manipulation ihrer Teleskopierbarkeit ausgebildete Verriegelungsanordnung, welche einen schwenkbaren Bedienhebel (11) besitzt, wobei der Bedienhebel (11) einen im Querschnitt L-förmigen, insbesondere zur Verbindung mit einem Adapter (1) nach einem der vorhergehenden Ansprüche ausgebildeten, Befestigungsabschnitt (12) mit einem ersten Befestigungsschenkel (12a) und einem zweiten Befestigungsschenkel (12b) aufweist.

9. Teleskopschiene (10) nach Anspruch 8,
**dadurch gekennzeichnet,**
**dass** der erste Befestigungsschenkel (12a) des Bedienhebels (11) wenigstens ein Durchgangsloch (H3, H4) besitzt, welches mit einer Durchgangsbohrung (H1, H2) eines Adapters (1) nach einem der Ansprüche 1 bis 7 korrespondiert, wobei im zusammengesetzten Zustand der Teleskopschiene (10) mit dem Adapter (1) der erste Befestigungsschenkel (12a) zumindest bereichsweise zwischen einer dritten Innenseite (7a) eines Stegs (7) und einer dritten Seitenfläche (9c) eines Vorsprungs (9) des Adapters (1) angeordnet ist, während der zweite Befestigungsschenkel (12b) zumindest bereichsweise zwischen einer ersten Innenseite (5a) oder einer zweiten Innenseite (6a) der Schenkel (5, 6) und einer ersten Seitenfläche (9a) oder einer zweiten Seitenfläche (9b) des Vorsprungs (9) des Adapters (1) angeordnet ist.

10. Auszugssystem (100), umfassend einen Betätigungsgriff (101) sowie zwei Teleskopschienen (10), vorzugsweise nach Anspruch 8 oder 9, welche jeweils eine zur Manipulation ihrer Teleskopierbarkeit ausgebildete Verriegelungsanordnung aufweisen, wobei die Verriegelungsanordnungen jeweils einen, vorzugsweise im Querschnitt zumindest abschnittsweise L-förmigen, Bedienhebel (11) besitzen, welche jeweils einen Adapter (1) nach einem der vorhergehenden Ansprüche aufweisen, wobei der Betätigungsgriff (101) über die Adapter (1) mit den Teleskopschienen (10) verbunden ist oder jeder Adapter mit einem Betätigungsgriff ausgebildet ist.
